(19) Europäisches Patentamt
European Patent Office
Office européen des brevets

(11) **EP 4 726 595 A1**

(12) **EUROPÄISCHE PATENTANMELDUNG**

(43) Veröffentlichungstag:
**15.04.2026 Patentblatt 2026/16**

(21) Anmeldenummer: **24206537.3**

(22) Anmeldetag: **14.10.2024**

(51) Internationale Patentklassifikation (IPC):
**G06F 30/20** (2020.01)  **B29C 45/76** (2006.01)
**G05B 17/02** (2006.01)  **G06F 30/27** (2020.01)
G06F 111/06 (2020.01)  G06F 113/22 (2020.01)
G06F 119/02 (2020.01)  G06F 119/08 (2020.01)
G06F 119/18 (2020.01)

(52) Gemeinsame Patentklassifikation (CPC):
**G06F 30/27; B29C 45/766; G05B 13/042;**
**G05B 17/02; G06F 30/20; G06N 20/00;**
B29C 2945/76949; G05B 2219/2624;
G05B 2219/45244; G06F 2111/06; G06F 2113/22;
G06F 2119/02; G06F 2119/08; G06F 2119/18

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(71) Anmelder: **SIMCON**
**kunststofftechnische Software GmbH**
**52146 Würselen (DE)**

(72) Erfinder: **OUD, Bastiaan**
**52146 Würselen (DE)**

(74) Vertreter: **Naeven, Ralf**
**König Naeven Schmetz**
**Patent- & Rechtsanwälte**
**Eupener Straße 2a**
**52066 Aachen (DE)**

(54) **COMPUTERIMPLEMENTIERTES VERFAHREN ZUR OPTIMIERUNG VON SPRITZGIESSPROZESSEN SOWIE SYSTEM ZUR DURCHFÜHRUNG DES VERFAHRENS**

(57) 1. Computerimplementiertes Verfahren zur Optimierung von Spritzgießprozessen und System zur seiner Durchführung, wobei das Verfahren folgende Schritte umfasst:

a) Durchführen einer ersten Simulationsrechnung zum Spritzgießen eines Bauteils unter Einsatz eines initialen Simulationsformteilmodells und eines initialen Prozessparametersatzes,

b) Durchführen mindestens einer weiteren Simulationsrechnung unter Einsatz mindestens einer veränderten Variante des Simulationsformteilmodells und/oder mindestens einer veränderten Variante der Prozessparameter,

c) Übermitteln der Ergebnisse der Simulationsrechnungen an eine Auswerteeinheit, wobei in der Auswerteeinheit ein Umgebungsparametersatz vorliegt oder in die Auswerteeinheit ein Umgebungsparametersatz eingegeben wird, wobei die Auswerteeinheit eingerichtet ist, anhand der Ergebnisse jeder der übermittelten Simulationsrechnungen jeweilige Werte von Auswertungsmerkmalen eines Satzes von Auswertungsmerkmalen zu ermitteln, wobei zumindest zu einer Teilanzahl der Auswertungsmerkmale zur Berechnung des zugehörigen Auswertungsmerkmalwerts mindestens einer der Umgebungsparameter einbezogen wird,

d) zu jeder Simulationsrechnung Berechnung eines Wertes einer Multifaktorfunktion anhand eines vorgegebenen Multifaktorfunktionsalgorithmus unter Einbeziehung der Auswertungsmerkmalswerte,

e) automatisierte Verarbeitung der Werte der Multifaktorfunktion der verschiedenen Simulationen mittels der Auswerteeinheit, und

f) aus der Verarbeitung der Werte der Multifaktorfunktion automatisierte Ermittlung eines Zielprozessparametersatzes, eines Zielformteilmodells und/oder eines Zielumweltparametersatzes für einen optimierten Spritzgießprozess.

**Fig. 1**

Start

Nutzer definiert

Auswertungs-merkmale

Prozessparameter-bereiche

Formteil-modell-bereich

Initiale Prozess-parameter

Initiales Formteil-modell

Umgebungs-parameter

Umgebungs-parameter-bereiche

Auswertungsmerkmals-wertbereiche

1. Simulation

Notwendigkeit der Umrechnung in alternative ökobilanzielle Werte

Automatisierte Erstellung von Varianten

2. Simulation

3. Simulation

[...]

n. Simulation

Übergabe der Ergebnisse an Auswerteeinheit

Auswerteeinheit berechnet Auswertungsmerkmalswerte (AWMW)

A1    A2    A3    A4

**Beschreibung**

Die Erfindung betrifft ein computerimplementiertes Verfahren zur Optimierung von Spritzgießprozessen sowie ein System zur Durchführung des Verfahrens.

Für Bauteile aus Kunststoff ist das Spritzgießen ein typisches Herstellungsverfahren, bei dem thermoplastisches, duroplastisches oder elastomeres Material unter Druck in Hohlräume einer Form gespritzt wird, wo es erstarrt und aushärtet. Die Formen sind in der Regel wiederverwendbar, so dass ein effizientes Verfahren gegeben ist, mit hoher Zuverlässigkeit in Vielzahl identischer Formteile zu produzieren. Das Auffinden einer optimalen Gestaltung der Form und geeigneter Verfahrensparameter wie z.B. in Bezug auf das Material des Kunststoffs, Temperatur, Druck und Einspritzstelle(n), kann kostspielig und zeitraubend sein, insbesondere wenn hierfür Versuche mit real herzustellenden Formen durchgeführt werden. Um diesen Aufwand zu reduzieren, können Simulationsrechnungen eingesetzt werden, die es erlauben, die Verfahrensparameter zu variieren.

An Spritzgießbauteile werden komplexe Qualitätsansprüche und Ziele gestellt. Neben der Funktionalität werden an die Herstellung und den Lebenszyklus von Spritzgießbauteilen zunehmend ökologische Ansprüche gestellt. Spritzgießsimulationen bieten die Möglichkeit, ökologische Aspekte bereits beim Design des Bauteils zu berücksichtigen.

Aus der US 8,392,160 B2 sind ein Verfahren und ein System der eingangs genannten Art bekannt, bei dem mittels Simulationsrechnungen für Spritzgießverfahren Energieindikatorwerte für eine Vielzahl von thermoplastischen Materialien bestimmt werden. Ein Energieindikatorwert soll den erwarteten Energiebedarf für die Durchführung einer Einspritzung des Materials in die Spritzgießform darstellen. Hierfür wird ein Einspritzvorgang für jedes der untersuchten thermoplastischen Materialien in einer ersten modellierten Form simuliert. Für das jeweilige Material wird ein zugehöriger Wert eines ersten Energieparameters auf der Grundlage des simulierten Einspritzvorgangs in den Hohlraum einer ersten modellierten Spritzgießform bestimmt. Auf Basis des jeweiligen Wertes des ersten Energieparameters wird ein zugehöriger Energieindikator für jedes der thermoplastischen Materialien bestimmt. In einer Ausführungsform des Verfahrens nach diesem Stand der Technik wird das Einspritzen jedes der thermoplastischen Materialien in einer oder in mehreren anderen modellierten Spritzgießhohlräumen simuliert, wobei jede der Hohlräume unterschiedliche geometrische Abmessungen aufweist.

Der genannte Stand der Technik beschränkt sich auf die Ermittlung eines Energieindikatorwertes, der den erwarteten Energiebedarf für verschiedene thermoplastische Materialien beschreibt, basierend auf einer Simulation des Einspritzvorgangs. Der Energieindikatorwert berücksichtigt primär Energieverbrauchsaspekte, wie das Erhitzen des Materials, den benötigten Druck und die Kühlung. Diese Parameter allein bieten jedoch keine umfassende ökologische Bewertung und berücksichtigen keine weiteren ingenieurtechnischen Ziele wie Kosten- und Qualitätsoptimierung. Der Energiebedarf ist jedoch nicht die einzige Größe, die in ökologischer Hinsicht relevant ist.

Der vorliegenden Erfindung liegt das technische Problem zugrunde, ein Verfahren und ein System der eingangs genannten Art zur Verfügung zu stellen, die die Berücksichtigung weiterer Größen für eine Optimierung des Spritzgießprozesses erlauben.

In Bezug auf das Verfahren wird das technische Problem mit den Merkmalen des Anspruchs 1 in Bezug auf das System mit den Merkmalen des Anspruch 10 gelöst. Vorteilhafte Ausführungsformen des erfindungsgemäßen Verfahrens sowie des erfindungsgemäßen Systems ergeben sich aus den anhängigen Ansprüchen.

Demnach wird ein computerimplementiertes Verfahren zur Optimierung von Spritzgießprozessen vorgeschlagen, welches folgende Schritte aufweist:

a) Durchführen einer ersten Simulationsrechnung zum Spritzgießen eines Bauteils unter Einsatz eines initialen Simulationsformteilmodells und eines initialen Prozessparametersatzes,
b) Durchführen mindestens einer weiteren Simulationsrechnung unter Einsatz mindestens einer veränderten Variante des Simulationsformteilmodells und/oder mindestens einer veränderten Variante der Prozessparameter,
c) Übermitteln der Ergebnisse der Simulationsrechnungen an eine Auswerteeinheit, in der ein Umgebungsparametersatz vorliegt oder der ein Umgebungsparametersatz eingegeben wird und welche eingerichtet ist, anhand der Ergebnisse zu jeder der übermittelten Simulationsrechnungen jeweilige Werte von Auswertungsmerkmalen eines Satzes von Auswertungsmerkmalen zu ermitteln, wobei zumindest zu einer Teilanzahl der Auswertungsmerkmale zur Berechnung des zugehörigen Auswertungsmerkmalwerts mindestens einer der Umgebungsparameter einbezogen wird,
d) zu jeder Simulationsrechnung Berechnung eines Wertes einer Multifaktorfunktion anhand eines vorgegebenen Multifaktorfunktionsalgorithmus unter Einbeziehung der Auswertungsmerkmalswerte,
e) automatisierte Verarbeitung der Werte der Multifaktorfunktion der verschiedenen Simulationen mittels der Auswerteeinheit, und
f) aus der Verarbeitung der Werte der Multifaktorfunktion automatisierte Ermittlung eines Zielprozessparametersatzes, eines Zielumgebungsparametersatzes und/oder eines Zielformteilmodells für einen optimierten Spritzgießprozess.

Ein Kern der Erfindung ist mithin, verschiedene Auswirkungen eines Spritzgießprozesses, z.B. ökologische und ökonomische Auswirkungen, mit automatisierten Mitteln unter Einsatz von den Spritzgießprozess simulierenden Simulationsrechnungen derart kombiniert zu berücksichtigen, dass ein vorzugsweise ökologisch optimierter Spritzgießprozess erreicht werden kann. Hierfür werden die Ergebnisse der Simulationsrechnungen in Bezug auf vordefinierte Auswertungsmerkmale automatisiert ausgewertet. Zumindest ein Teil der Auswertungsmerkmale ist abhängig von mindestens einem Umgebungsparameter, wie zum Beispiel Umgebungstemperatur oder Luftdruck am Ort des realen Spritzgießprozesses, Energiepreis, Energieverbrauch der eingesetzten Spritzgießmaschine oder Transportweg für Rohstoffe. Die Auswertungsmerkmale können für bestimmte Arten von Auswirkungen, insbesondere ökologische und/oder ökonomische Auswirkungen, des Spritzgießprozesses stehen. Zu den Auswertungsmerkmalen kann jeweils automatisiert ein Auswertungsmerkmalswert ermittelt werden, der z.B. einer berücksichtigten Auswirkung zugeordnet wird. Um ein Maß für die Gesamtheit der Auswirkungen eines bestimmten simulierten Spritzgießprozesses zu erhalten, wird mit einer Multifaktorfunktion durch Verrechnung der Auswertungsmerkmalswerte ein Multifaktorfaktorwert ermittelt.

Die jeweiligen Multifaktorwerte einer Mehrzahl von Simulationsrechnungen werden in einem vorgegebenen Algorithmus miteinander verarbeitet, um zu bestimmen, welches Simulationsformteilmodell und welcher Prozessparametersatz bei welchen Umgebungsparametern zu einem optimierten Spritzgießprozess führen. So können für den realen Spritzgießprozess bei gegebenen Umgebungsparametern anhand der über den Algorithmus ermittelten Zielprozessparameter und des Zielformteilmodells die geeigneten Prozessparameter und das geeignete Formteil herangezogen werden. Die im realen Prozess zu erwartenden Umgebungsparameter können auch beeinflusst werden, wie zum Beispiel Umgebungstemperaturen oder die Luftfeuchtigkeit am Ort des realen Prozesses. Bei nicht unmittelbar beeinflussbaren Umgebungsparametern, wie zum Beispiel Energiepreisen, kann ein Abwarten auf geeignete Zeitpunkte für den realen Spritzgießprozess sinnvoll sein. Somit können Zielumweltparameter als Ergebnis des erfindungsgemäßen Verfahrens für eine Optimierung des Spritzgießprozesses sinnvoll sein.

Anhand der automatisierten Verarbeitung der Multifaktorwerte ist somit eine automatisierte oder teilautomatisierte Optimierung des Spritzgießprozesses möglich, indem Zielgrößen für den Prozessparametersatz, das optimierte Zielformteilmodell und/oder den Umgebungsparametersatz ermittelt werden, die eine Optimierung unter Berücksichtigung einer Vielzahl von Faktoren erlauben, insbesondere unter Berücksichtigung von allgemeinen, ingenieursfokussierten Zielen in Kombination ökobilanzieller Ziele. Somit wird in technischer Hinsicht eine erhebliche Minimierung des Aufwandes zum Auffinden einer Optimums im Zusammenhang mit einem Spritzgießprozess, insbesondere in Hinblick auf den Umweltschutz aber auch unter Einbeziehung weiterer, z.B. ökonomischer Aspekte, erreicht. Insbesondere kann aufgrund der Einbeziehung vielfältiger Umgebungsparameter und Auswertungsmerkmale ein erheblicher Zeitgewinn und eine erhebliche Ressourcenersparnis gegenüber sonstigen Optimierungsversuchen erreicht werden.

Die Optimierung kann sich auf den Spritzgießprozess als solchen, auf die Wahl und/oder Herstellung eines Werkzeuges und/oder einer Spritzgießform und/oder auf das herzustellende Bauteil beziehen. Die Zielrichtung der Optimierung kann mit der Auswahl der Auswertungsmerkmale bestimmt werden. Die Optimierung kann sich nicht nur einen einzelnen Aspekt, wie z.B. den Energieverbrauch, einbeziehen, sondern, insbesondere aufgrund des Einbezugs des Umgebungsparametersatzes, auch weitere ökologische Einflüsse, wie z.B. den $CO_2$-Fußabdruck des Spritzgießprozesses, die Entsorgung verbrauchter realer Spritzgießformen, Spritzgießwerkzeuge oder gefertigter Bauteile. Es können auch Kosten des Spritzgießprozesses, einschließlich der Kosten der Produktionsumgebung, oder Qualitätsmerkmale der gefertigten Bauteile oder die Stabilität des Produktionsprozesses einbezogen werden. Erstmals ist es möglich, automatisiert unterschiedliche Auswertungsmerkmale aus sehr verschiedenen Bereichen miteinander zu kombinieren und aus einem Spannungsfeld von z.B. Funktionalität, Qualität, ökologischem Einfluss sowie Kosten für eine multifaktorielle Optimierung in der Spritzgießsimulation zu nutzen.

Im Folgenden werden die für die Darstellung des erfindungsgemäßen Verfahrens genutzten Begriffe und Schritte erläutert:

Jedes Simulationsformteilmodell definiert z.B. eine bestimmte Formteilgeometrie, insbesondere mindestens einen Formteilhohlraum und vorzugsweise Wandstärken, sowie vorzugsweise Materialeigenschaften des Simulationsformteils.

Die Prozessparameter umfassen beispielsweise mindestens eine, eine beliebige Teilmenge oder die Gesamtheit der folgenden beispielhaften Größen: Position, Ausrichtung und/oder Öffnungsgröße einer oder mehrerer Einspritzstellen, ein Spritzgießmaterial, eine Einspritztemperatur des Spritzgießmaterials, eine Anfangstemperatur und/oder Anfangstemperaturverteilung des Simulationsformteils, einen Einspritzdruck, eine Einspritzdruckverteilung und/oder ein Einspritzdruckprofil, eine Einspritzgeschwindigkeit, eine Einspritzgeschwindigkeitsverteilung und/oder ein Einspritzgeschwindigkeitsprofil, einen Umschaltzeitpunkt zum Umschalten zwischen Füllphase und Nachdruckphase, einen Nachdruck, eine Nachdruckverteilung und/oder ein Nachdruckprofil oder eine Kühlzeit.

Bei den Umgebungsparametern handelt es sich um Parameter, die durch die Prozessumgebung im weitesten Sinne bestimmt sein können. Die Prozessumgebung im weitesten Sinne meint nicht nur das nähere räumliche Umfeld des realen Spritzgießprozesses mit messbaren Größen, wie Temperaturen oder Luftfeuchtigkeit, und/oder die Art der eingesetzten Spritzgießmaschine, der zu erwartende Energiemix, und/oder der Basisenergieverbrauch der Spritzgießmaschine. Die Prozessumgebung umfasst vielmehr auch im Allgemeinen den Spritzgießprozess beeinflussende Bereiche und/oder vom Spritzgießprozess beeinflusste Bereiche. Hierzu gehören im zeitlichen Vorfeld des Prozesses z.B. Transportwege oder Transportkosten für die für den Prozess benötigten Rohstoffe, oder zeitlich nach dem Prozess die Entsorgungskosten oder der Umwelteinfluss des hergestellten Produkts.

Die Umgebungsparameter können Grundlage für zumindest eine Teilanzahl der Auswertungsmerkmale sein, welche weiter unten näher erläutert werden. Die Umgebungsparameter oder eine Teilanzahl der Umgebungsparameter können z.B. vom Nutzer definiert werden oder sind beim Start des erfindungsgemäßen Verfahrens vordefiniert. Die Umgebungsparameter können in der Auswerteeinheit zusammen mit den Ergebnissen der Simulationsrechnungen zur Berechnung zumindest einer Teilanzahl der Auswertungsmerkmalswerte dienen.

Die Umgebungsparameter können im Simulationsprogramm vordefiniert sein und vom Simulationsprogramm automatisiert ausgewählt werden. Es ist auch möglich, vom Nutzer dem Simulationsprogramm eingegebene Werte für Umgebungsparameter vorzugeben oder über mindestens eine Messgerät-Schnittstelle mindestens einen Wert mindestens eines Messgerätes als Umgebungsparameter unmittelbar oder über eine Zwischenspeicherung zu übernehmen, z.B. eine Umgebungstemperatur oder einen Luftdruckwert. Dabei kann es sich auch um zeitabhängige Umgebungsparameter, die sich während eines Spritzgießprozesses ändern, handeln. Die Zeitabhängigkeit kann aus unterschiedlichen Zeitdauern resultieren, z.B. der Einsatzdauer einer Maschine, oder aus Schwankungen relevanter Werte während des Einsatzes einer Maschine oder einer Ressource, z.B. eines sich über die Einsatzzeit ändernden Leistungsbedarfs oder Energiepreises.

Ein Umgebungsparameter kann auch in Abhängigkeit von weiteren Parametern, wie z.B. dem Standort, dem ausgewählten Material oder den Eigenschaften des Bauteils vorgegeben sein.

Der Umgebungsparameter oder zumindest eine Teilanzahl der Umgebungsparameter kann außer durch eine Vorgabe im Simulationsprogramme oder einer automatisierten Zuführung durch eine weitere Vorrichtung, z.B. ein Messgerät, auch händisch von einem Nutzer vor Start des Simulationsprogramms oder währenddessen eingegeben oder angepasst werden.

Es wird nach der ersten Simulationsrechnung mindestens eine weitere Simulationsrechnung durchgeführt, wobei für jede Simulationsrechnung das Simulationsformteilmodell und/oder mindestens ein Prozessparameter variiert wird. Unter einer Variante des Simulationsformteilmodells wird ein verändertes Simulationsformteilmodell verstanden, mit einer Veränderung z.B. in seiner Geometrie des Formteilhohlraums und vorzugsweise der Wandstärke(n) und/oder seines Materials und/oder seiner Materialien und/oder seiner Funktionalitäten. Unter einer Variante eines Prozessparameters wird ein veränderter Prozessparameter verstanden, wobei optional zu zumindest einem der Prozessparameter ein Prozessparameterbereich vorgegeben werden kann, auf den die Variation des Prozessparameters beschränkt ist.

Zur automatisierten Ermittlung der Varianten kann zur Verringerung der Simulationsdurchgänge eine statistische Versuchsplanung genutzt werden, vorzugsweise mit der bekannten D-optimal-Methode (z.B. Dokument "D-Optimaler Versuchsplan", © 2020 CRGRAPH unter https://crgraph.de/themen-index/). Andere Versuchspläne als D optimale Versuchspläne können ebenfalls genutzt werden.

Mit einem vorzugsweise automatisiert erstellten Versuchsplan, beispielsweise einem D optimalen Versuchsplan, kann z.B. ein unkorrelierter Versuchsplan mit automatisiert vordefiniertem Modell n-ter Ordnung eingesetzt werden. Das der Versuchsplanung zugrunde liegende Modell kann linear, linear gemischt, quadratisch, gemischt quadratisch, aber auch höherer Ordnung sein. Vorzugsweise erfolgt eine automatisierte Auswahl eines linearen oder quadratischen Modells. Ein passendes Modell kann z.B. durch die Bewertung mittels des Bestimmtheitsmaßes $R^2$ definiert werden.

Die Ergebnisse der Simulationen werden in einer Auswerteeinheit in Bezug auf die Auswertungsmerkmale analysiert. Die Auswerteeinheit ist durch ein Datenverarbeitungsprogramm gebildet, welches selbständig mit eigenen Schnittstellen versehen oder Bestandteil eines umfassenderen Datenverarbeitungsprogramms sein kann. Die Auswerteeinheit ist somit nicht zwangsläufig eine körperlich abgrenzbare Einheit. Die Auswerteeinheit und weitere Einheiten, die zum Einsatz im erfindungsgemäßen computerimplementierten Verfahren kommen, können auch durch virtuelle Maschinen gebildet sein.

Die Auswertungsmerkmale sind sich auf den realen Spritzgießprozess und ein damit real erzeugtes Bauteil beziehende Merkmale, welche für die Optimierung des Prozesse maßgeblich sind. Als Auswertungsmerkmale können zum Beispiel der ökologische und/oder der soziale Einfluss eines nach der Simulation durchgeführten realen Spritzgießprozesses und eines damit erzeugten Bauteils, die Gesamtkosten des realen Spritzgießprozesses, die Qualität des erzeugten Bauteils und die Stabilität des Spritzgießprozesses herangezogen werden. Zumindest eine Teilanzahl der Auswertungsmerkmale wird durch die Umgebungsparameter beeinflusst, welche vom Nutzer initial definiert werden oder als feste initiale Umgebungsparameter bereits im System hinterlegt sind, z.B. in der Auswerteeinheit. Sofern z.B. der ökologische Fußabdruck des Spritzgießprozesses als Auswertungsmerkmal herangezogen wird, kann dieses Auswertungsmerkmal zum Beispiel direkt vom Umgebungsparameter "Energiemix" abhängen.

Im Laufe des erfindungsgemäßen Verfahrens werden von der Auswerteeinheit die Konsequenzen aus den Ergebnissen zumindest einer Teilanzahl der Simulationsrechnungen unter Berücksichtigung der gegebenenfalls beteiligten Umgebungsparameter auf die Auswertungsmerkmale ermittelt. Hierfür werden den betrachteten Auswertungsmerkmalen jeweils ein dimensionsloser Auswertungsmerkmalswert zugeordnet, der z.B. mittels eines vorgegebenen Algorithmus aus einem in der Regel mit einer Dimension versehenen Größenwert einer dem Auswertungsmerkmal zugeordneten Größe ermittelt werden kann. Eine beispielhafte Art und Weise der Ermittlung eines Auswertungsmerkmalswertes ist weiter unten dargestellt.

Die Auswertungsmerkmale können in Auswertungsteilmerkmale aufgeteilt werden, die ebenfalls berücksichtigt werden können. In Bezug auf den ökologischen und/oder sozialen Einfluss eines Spritzgießprozesses und eines damit erzeugten Bauteils können beispielsweise zum Auswertungsmerkmal "ökologischer Einfluss" als Auswertungsteilmerkmale z.B. die jeweiligen ökologischen Einflüsse folgender beispielhaft aufgezählter Umgebungsparameter gewählt werden: der Transportwege, der Verwendung von Recyclingmaterial und/oder des Anteils des Recyclingmaterials im Herstellungsprozess, am Bauteil und/oder am Spritzgießformteil, und/oder des Strommixes. Der ökologische Einfluss kann z.B. durch die Ökobilanzierung, auch Life Cycle Assessment (LCA) genannt, und der soziale Einfluss durch die soziale Lebenszyklusanalyse, oder social Life Cycle Assessment (S-LCA) ermittelt werden. Die für das Auswertungsmerkmal Ökobilanzierung und/oder soziale Lebenszyklusanalyse zu berücksichtigenden damit untergeordneten Auswertungsteilmerkmale sind z.B. das $CO_2$-Äquivalent, auch $CO_2$-Fußabdruck genannt, der Ressourcenverbrauch, z.B. von Wasser, das Abfallmanagement, bevorzugt einschließlich des End-of-Life Managements, die Ökotoxizität, das Versauerungspotenzial, das Eutrophierungspotenzial, die Humantoxizität und/oder das photochemische Ozonbildungspotenzial.

Auswertungsteilmerkmale des Auswertungsmerkmals "Gesamtkosten" des realen Spritzgießprozesses können z.B. die Energiekosten, die Materialkosten, die Kosten im Zusammenhang mit Anschaffung und Betrieb der einzusetzenden Maschinen und/oder die Zykluszeit sein.

Auswertungsteilmerkmale des Auswertungsmerkmals "Qualität des erzeugten Bauteils" können z.B. Maßhaltigkeit in der Länge in einer bestimmten Raumrichtung, Ebenheit, Rundheit und/oder Wandstärke, das Vorhandensein von Oberflächendefekten, Materialdegradation oder mechanische Eigenschaften sein.

Auswertungsteilmerkmale des Auswertungsmerkmals "Stabilität des Spritzgießprozesses" können z.B. die Sensitivität von Prozessparametern, Umgebungsparametern und/oder Randbedingungen auf die Auswertungsmerkmale sein und/oder die thermische Stabilität des Spritzgießprozesse, z.B. in Bezug auf das Werkzeug, das Kühlsystem und/oder das Formteil.

Die Aufzählung der möglichen Auswertungsmerkmale und Auswertungsteilmerkmale ist nicht abschließend. Jedem Auswertungsteilmerkmal können diesen wiederum untergeordnete Auswertungsteilmerkmale zugeordnet werden, so dass ein Hierarchie aufgebaut wird.

Auswertungsmerkmalswerte sind vorzugsweise dimensionslose Werte, welche den Auswertungsmerkmalen von der Auswerteeinheit zugeordnet werden. Entsprechendes gilt für Auswertungsteilmerkmale, soweit diese im Verfahren eingesetzt werden. Jedem Auswertungsmerkmal oder Auswertungsteilmerkmal liegt eine messbare oder ermittelbare Größe zugrunde. So kann beispielsweise dem Auswertungsteilmerkmal der Maßhaltigkeit in der Länge in einer bestimmten Raumrichtung die zu erwartende Toleranz als Größe zugrunde gelegt werden.

Zur Ermittlung eines Auswertungs(teil)merkmalswertes kann z.B. vorgesehen werden, einem bestimmten Auswertungs(teil)merkmal zunächst einen Zielwert der zugehörigen Größe zuzuordnen, z.B. für die Maßhaltigkeit in der Länge in einer bestimmten Raumrichtung eine Toleranz von beispielsweise $\Delta$ = +/- 3 $\mu$m. Um diesen Zielwert herum wird für die Größe ein Vertrauensbereich gesetzt, innerhalb dessen erwartet werden kann, dass das Ergebnis oder der Ablauf des Spitzgießprozesses noch akzeptabel sein könnte, z.B. ein Vertrauensbereich $VB = |v_2| - |v_1|$ mit einer minimalen Toleranz von $\Delta_{min}$ = 1 $\mu$m (=$v_1$) bis zu einer maximalen Toleranz von $\Delta_{max}$ = +/- 5 $\mu$m (= $v_2$).

Zur Ermittlung des Auswertungsmerkmalswertes oder Auswertungsteilmerkmalswertes kann beispielhaft wie folgt vorgegangen werden: Ermittelt die Auswerteeinheit in Bezug auf eine Simulationsrechnung zu einem bestimmten Auswertungsmerkmal oder Auswertungsteilmerkmal einen bestimmten Größenwert $w_i$, wird die Differenz zwischen dem Größenwert $w_i$ zum Zielwert $z_i$ festgestellt und durch den Vertrauensbereich $VB_i$ dividiert. Hierdurch erhält man eine dimensionslose Zahl, die als Auswertungsmerkmalswert oder Auswertungsteilmerkmalswert $a_i$ dient. Formelhaft kann dieser Zusammenhang wie folgt dargestellt werden:

$$ai = \left(\frac{wi - zi}{VBi}\right) \qquad (1)$$

Ein Beispiel eines einfachen, von einem Umgebungsparameter abhängigen Auswertungsmerkmals kann der $CO_2$-Fußabdruck der Herstellung des für den Spritzgießprozess eingesetzten Rohstoffes sein. So kann die Simulationsrechnung ergeben, dass für den Spritzgießprozess eine Masse m eines Rohstoffes eingesetzt werden muss. Der Umgebungsparameter kann der auf die Masse normierte $CO_2$-Fußabdruck f sein, sodass das Auswertungsmerkmal $a_j$ das einfache Produkt $a_j$ = m*f ist.

Um bei der Auswertung der Multifaktorfunktion, welche im folgenden Absatz erläutert ist, auf die Möglichkeit reagieren zu können, dass für mindestens eines der Auswertungsmerkmale der ermittelte Größenwert $w_i$ außerhalb des Vertrauensbereichs $VB_i$ liegt, kann ein Penaltyfaktor $p_i$ vorgesehen werden, mit dem der Auswertungs(teil)merkmalswert verknüpft wird, und der bei außerhalb des Vertrauensbereichs liegendem Wert $w_i$ ungleich 1 ist. Die Verknüpfung kann beispielsweise eine Multiplikation sein. Liegt der ermittelte Größenwert $w_i$ außerhalb des Vertrauensbereichs, kann automatisiert eine diesbezügliche Information für den Nutzer abgegeben werden.

Die Multifaktorfunktion ist eine über den vorgegebenen Multifaktorfunktionalgorithmus von den Auswertungsmerkmalswerten und/oder Auswertungteilmerkmalswerten abhängige und automatisiert ermittelte Funktion, die als Maß für die Optimierung des Spritzgießprozesses des gewünschten Bauteils dienen kann. Der Algorithmus ist für jeden automatisch ablaufenden Prozess vorgegeben, kann vorzugsweise aber auch an sich ändernde Gegebenheiten anpassbar sein, z.B. an sich ändernde Kosten für Rohstoffe und Energie, an sich ändernde Umweltschutzvorgaben oder an sich ändernde Anforderungen an das mit dem Spritzgießverfahren herzustellende Bauteil. Die Multifaktorfunktion kann eine mathematische Funktion, insbesondere eine analytische Funktion $F(a_0; .... a_n)$ sein, mit der die $a_0$ bis $a_n$, welche die Werte der Auswertungsmerkmale $a_i$ sind, verarbeitet werden. Im einfachsten Fall kann die Multifaktorfunktion eine Summe der Absolutwerte der Auswertungsmerkmalswerte sein, wie im Folgenden in einer normierten Form unter Berücksichtigung des Penaltyfaktors $p$; dargestellt ist:

$$F^{normiert} = \sum_{k=0}^{n} pi * ||\left(\frac{wi - zi}{VBi}\right)|| \qquad (2)$$

Mit Vertrauensbereich $V\,Bi = |vi2| - |vi1|$

$$zi = \; Zielwert,\; z.B.\; zentral\; im\; Vertrauensbereich\; VBl$$

Zu jeder Simulation kann ein Wert der zugehörigen Multifaktorfunktion ermittelt werden.

Es ist denkbar, den niedrigsten der Multifaktorfunktionswerte heranzuziehen und den Prozessparametersatz und/oder das Formteilmodell der zugehörigen Simulation als Zielprozessparametersatz und/oder als Zielformteilmodell für einen optimierten Spritzgießprozess zu nutzen. Der in der Auswerteeinheit mit dem Ergebnis der zugehörigen Simulation genutzte Umweltparametersatz kann als Zielumweltparametersatz herangezogen werden. Es ist auch denkbar, die ermittelten diskreten Multifaktorwerte mit einer vorzugsweise kontinuierlichen mathematischen Funktion, im Folgenden Optimierungsfunktion genannt, abzubilden und zur Optimierungsfunktion einen Extremwert, z.B. ein Minimum, zu ermitteln. Dem Extremwert können Prozessparameter, Umgebungsparameter und/oder ein Formteilmodell zugeordnet werden, die gegenüber den in den Simulationsrechnungen und in der Auswerteeinheit Eingesetzten verändert sein und als Zielprozessparametersatz, Zielumgebungsparametersatz und/oder Zielformteilmodell für einen optimierten Spritzgießprozess dienen können.

Mit dem so ermittelten Zielprozessparametersatz und dem Zielformteilmodell kann zur Kontrolle nochmals eine Simulationsrechnung durchgeführt werden. Ist das Ergebnis befriedigend, können der Zielprozessparametersatz und das Zielformteilmodell der Maschine für den realen Spritzgießprozess als Eingangsdatensatz zur Verfügung gestellt werden, wobei die zum Zeitpunkt des realen Spritzgießprozesses gegebenen Umgebungsparameter mit den Zielumgebungsparametern auf zumindest weitgehende Übereinstimmung überprüft werden kann. Zielprozessparametersatz, Zielumgebungsparametersatz und/oder Zielformteilmodell, welche in ihrer Gesamtheit verkürzend als Zielwerte bezeichnet werden, können alternativ oder zusätzlich als Basis für weitere Optimierungsschritte dienen. Die Entscheidung über die Nutzung der ermittelten Zielwerte für den realen Spritzgießprozess und/oder für eine Nutzung für weitere Optimierungsschritte kann anhand von gesetzten Grenzwerten, z.B. für den die Zielwerte bestimmenden Multifaktorfunktionswert, automatisiert vom erfindungsgemäßen Verfahren oder über eine Nutzerschnittstelle vom Nutzer getroffen werden.

Die Auswerteeinheit kann über eine Schnittstelle mit einer Simulationseinheit zur Durchführung der Simulation verbunden sein. Die Schnittstelle kann einen räumlichen Abstand zwischen Simulationseinheit erlauben. Die Schnittstelle kann drahtlos sein. Die Schnittstelle kann auch Teil eines Netzwerks, insbesondere des Internets sein. Es ist aber auch möglich, die Auswerteeinheit in die Simulationseinheit zu integrieren. Wie bereits dargestellt können einzelne oder alle Einheiten als virtuelle Maschinen implementiert sein, die auch verteilt, also innerhalb eine Netzwerkes (LAN oder WAN), verteilt sein können.

Der Optimierungsprozess kann völlig automatisch durch die voreingestellten Algorithmen in der Auswerteeinheit ablaufen.

Es kann vorteilhaft sein, das erfindungsgemäße Verfahren so auszuführen, dass der Multifaktorwertalgorithmus durch eine künstliche Intelligenz angepasst wird. Mit Einsatz einer implementierten künstlichen Intelligenz (im Folgenden kurz als KI bezeichnet) kann der Multifaktorwertalgorithmus durch maschinelles Lernen, vorzugsweise mit Hilfe mindestens eines neuronalen Netzes, kontinuierlich verbessert werden. So kann die KI historische Daten aus früheren Simulationen und aus realen, den Spritzgießprozess umfassenden Produktionsläufen analysieren, um Muster zu erkennen und zukünftige Prozessoptimierungen zu prognostizieren. Die Anwendung der KI bietet eine besondere Anpassungsfähigkeit, um auf dynamische Veränderungen zu reagieren. Ein Beispiel für den Einsatz der KI wäre die Anpassung des Multifaktorwertalgorithmus an dynamische Veränderungen in den Rohstoffkosten oder den gesetzlichen Umweltvorgaben. Mit Hilfe der künstlichen Intelligenz kann über maschinelles Lernen ein Ursache-Wirkungsmodell unter Berücksichtigung der allgemeinen ingenieurstechnischen und ökobilanziellen Ziele erstellt werden.

Das erfindungsgemäße Verfahren kann auch so ausgeführt werden, dass über mindestens eine Unterstützungseinheit-Schnittstelle zwischen der Auswerteeinheit und/oder der Simulationseinheit einerseits und einer externen Unterstützungseinheit Auswertungsmerkmale betreffende Unterstützungsinformationen ausgetauscht werden. Eine solche externe Unterstützungseinheit kann beispielsweise eingerichtet sein, die Zusammensetzung des aktuellen Strommixes und/oder den $CO_2$-Fußabdruck der für den Spritzgießvorgang benötigten Energie und/oder der verwendeten Kunststoffmasse, vorzugsweise unter Berücksichtigung ihrer Herstellung, und/oder des Transports der am Spritzgießprozess beteiligten Komponenten zu ermitteln und die so erlangte Information der Auswerteeinheit und/oder der Simulationseinheit automatisiert zu übermitteln, z.B. ausgelöst durch festgestellte Änderungen, z.B. des Strommixes und/oder der Energie- oder Rohstoffpreise. Die Unterstützungsinformation kann z.B. dazu dienen, den Umgebungsparameterdatensatz für die folgenden Verfahrensschritte oder für eine weitere Simulationsrunde anzupassen.

Die Unterstützungseinheit und/oder die Unterstützungseinheit-Schnittstelle kann bzw. können räumlich getrennt von der Simulationseinheit und/oder der Auswerteeinheit vorgesehen sein. Die Unterstützungseinheit-Schnittstelle und damit die Unterstützungseinheit können drahtgebunden oder drahtlos ggf. auch über ein Netzwerk mit der Simulationseinheit und/oder der Auswerteeinheit verbunden sein. Die Unterstützungseinheit kann sich z.B. am Ort des nach der Simulation auszuführenden realen Spritzgießprozesses befinden. Die Unterstützungseinheit kann eine Eingabeschnittstelle für eine manuelle oder automatisierte Eingabe der Unterstützungsinformation aufweisen. Automatisiert können z.B. aktuelle Energiekosten einzelner Energieressourcen, der aktuelle Energiemix, aktuelle Materialkosten oder sonstige Umgebungsparameter und/oder Parameter für eine Lebenszyklusanalyse des herzustellenden Bauteils eingegeben werden, wenn die Eingabeschnittstelle für die Eingabe der Unterstützungsinformation mit einer geeigneten Quelle verbunden ist. Zusätzlich oder alternativ können auch Messgeräte für relevante Größen, wie Temperatur, Luftdruck und/oder Luftfeuchtigkeit als Quelle für Unterstützungsinformation vorgesehen sein.

Das erfindungsgemäße Verfahren kann auch so ausgeführt werden, dass die externe Unterstützungseinheit eingerichtet ist, als Unterstützungsinformation eine Lebenszyklusanalyse oder ein Life Cycle Assessment (LCA) für zumindest eines der Auswertungsmerkmale oder Auswertungsteilmerkmale durchzuführen. Hierfür kann zum betroffenen Auswertungs(teil)merkmal, z.B. dem Energie- und/oder Rohstoffverbrauch, von der externen Unterstützungseinheit z.B. ein ökobilanzieller Wert ermittelt werden, der von der Auswerteeinheit zur Ermittlung des Auswertungsmerkmalswerts eingesetzt wird oder direkt als alternatives Auswertungsmerkmalwert genutzt wird, z.B. ein Wert für den $CO_2$-Fußabdruck des ursprünglichen Auswertungsmerkmals. Der ökobilanzielle Wert des alternativen Auswertungsmerkmals kann von der Auswerteeinheit zur Berechnung des Multifaktorwertes einbezogen werden.

Daten und Informationen, die z.B. aus externen Daten- und/oder Informationsquellen über die Unterstützungseinheit-Schnittstelle eingespeist werden, können nicht nur zur Ermittlung des Auswertungs(teil)merkmalswert dienen. Sie können z.B. in zukünftig durchzuführenden erfindungsgemäßen Verfahren als Erkenntnisquelle für die Erstellung eines Prozessparametersatzes und/oder Umgebungsparameterdatensatzes und/oder eines Simulationsformteilmodells für die erste Simulationsrechnung dienen. Sie können auch für die Ermittlung der Varianten der weiteren Simulationsrechnungen desselben Verfahrens berücksichtigt werden. Dabei kann die künstliche Intelligenz maschinelles Lernen verwenden, um den Prozessparametersatz und/oder Umgebungsparameterdatensatz und/oder eines Simulationsformteilmodells und/oder die Varianten hiervon zu berechnen.

Das erfindungsgemäße Verfahren kann auch so ausgeführt werden, dass an einer graphischen Benutzerschnittstelle (GUI) der Wert der Multifaktorfunktion und/oder die ermittelten Auswertungs(teil)merkmalswerte, vorzugsweise in Echtzeit, angezeigt werden und für einen Benutzer eine Eingabemöglichkeit bereitgestellt wird. Die graphische Benutzerschnittstelle kann räumlich getrennt von der Simulationseinheit und/oder der Auswerteeinheit und unabhängig von der Unterstützungseinheit-Schnittstelle oder als Teil der Unterstützungseinheit-Schnittstelle vorgesehen sein. Die graphische Benutzerschnittstelle ermöglicht eine Echtzeitdarstellung der Ergebnisse zumindest der ersten, bevorzugt jeder Simulationsrechnung des Verfahrens. Anhand dessen kann ein Nutzer beurteilen, ob weitere Simulationsrechnungen erforderlich oder sinnvoll sind. Mit der Eingabemöglichkeit kann der Nutzer den Prozess beeinflussen.

Es kann vorteilhaft sein, das erfindungsgemäße Verfahren so auszuführen, dass die Auswertungsmerkmalswerte mit einem automatisiert oder manuell anpassbaren Gewichtungsfaktor $g_i$ gekoppelt werden. Ein Gewichtungsfaktor ermöglicht eine Anpassung des Einflusses eines Auswertungsmerkmalwertes auf den Wert der Multifaktorfunktion $F(g_1 * p_1 * a_1; \ldots g_n * p_n * a_n)$. Die obige Funktion (2) könnte damit im einfachsten Fall wie folgt geschrieben werden:

$$F^{normiert} = \sum_{k=0}^{n} gi * pi * ||\left(\frac{wi - zi}{VBi}\right)|| \qquad (3)$$

Der Gewichtungsfaktor kann somit zur Reaktion auf Entwicklungen dienen, z.B. bezüglich Änderungen der Energie- und/oder Materialkosten und/oder auf aktuelle wirtschaftliche, politische und/oder regulatorische Anforderungen. Zudem können unterschiedliche Optimierungsziele flexibel priorisiert werden, z.B. die Minimierung der Umweltauswirkungen gegenüber der Maximierung der Kosteneffizienz. Es kann vorteilhaft sein, den Gewichtungsfaktor oder mindestens einen der Gewichtungsfaktoren der künstlichen Intelligenz für den Prozess des maschinellen Lernens zur Verfügung zu stellen.

Des Weiteren kann ein Gewichtungsfaktor mit mindestens einem der Umgebungsparameter bei der Berechnung eines der Auswertungsmerkmalswerte gekoppelt sein, insbesondere wenn mehr als ein Umgebungsparameter zur Berechnung des Auswertungsmerkmalswertes herangezogen wird. Die Kopplung kann zum Beispiel eine einfache Multiplikation sein.

Das erfindungsgemäße Verfahren kann auch so ausgeführt werden, dass der Zielprozessparametersatz, vorzugsweise automatisiert, einem realen Spritzgießprozess zugeführt wird. Somit kann der ermittelte Zielprozessparametersatz zeitlich unmittelbar oder versetzt einem realen Spritzgießprozess zugeführt werden, insbesondere, wenn das Formteil schon vorliegt und für die Optimierung nicht verändert werden muss. So kann es vorteilhaft sein, regelmäßig für reale Spritzgießprozesse einen Optimierungslauf durchzuführen, wobei auch bei sich ändernden Umgebungsparametern die Optimierung gewährleistet bleiben kann, indem im erfindungsgemäßen Verfahren die Zielparameter automatisch angepasst werden können. Hierfür weist das erfindungsgemäße System eine reale Spritzgießmaschine mit einer Schnittstelle zum Datenaustausch mit der Simulationseinheit und/oder der Auswerteeinheit und/oder der Nutzerschnittstelle auf.

Im Folgenden werden ein beispielhaftes Verfahren und ein beispielhaftes System gemäß der diesseitigen Erfindung anhand von Figuren dargestellt.

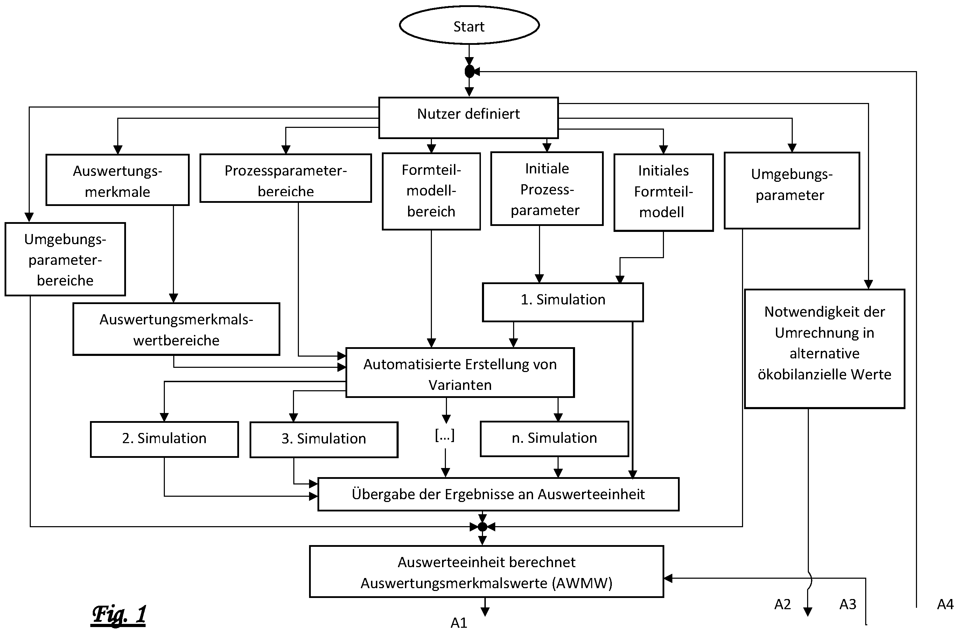

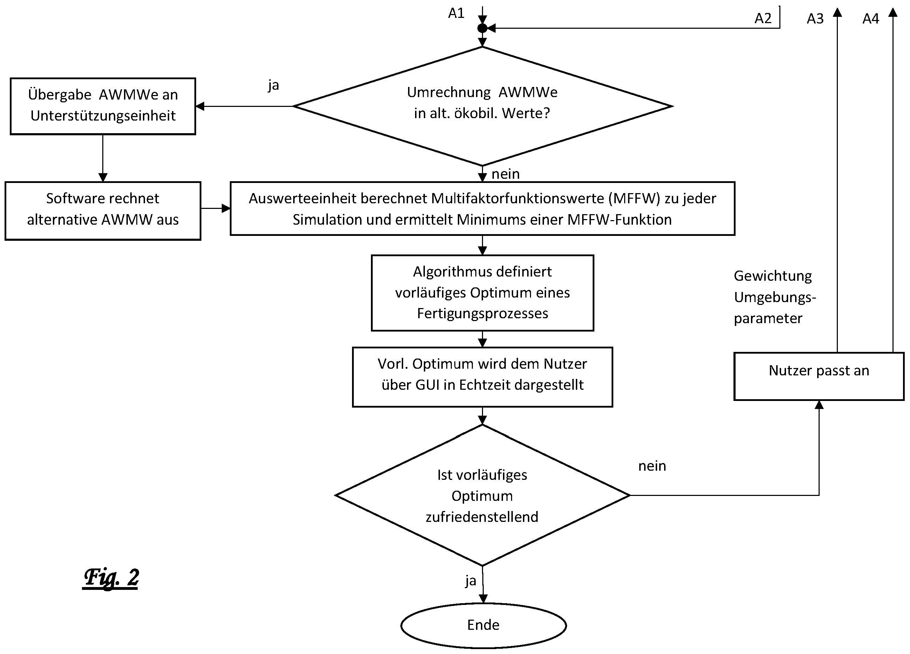

Fig. 1 und 2 zeigen in zwei Teildarstellungen ein beispielhaftes Ablaufdiagramm für das erfindungsgemäße Verfahren, welches computerimplementiert durchgeführt wird.

Für die Durchführung einer ersten Simulationsrechnung für ein Spritzgießverfahren werden beim Start vom Nutzer ein Satz initialer Prozessparameter und ein initiales Simulationsformteilmodell definiert. Alternativ können die initialen Prozessparameter und das initiale Simulationsformteilmodell oder eine Teilanzahl dieser Größen im System zur Durchführung des Verfahrens bereits abgespeichert sein.

Mit den initialen Prozessparametern und dem initialen Simulationsformteilmodell wird eine erste Simulation eines Spritzgießprozesses durchgeführt. Zur Ermittlung von Zielprozessparametern und ein Zielformteilmodell, mit dem der reale Spritzgießprozess optimiert durchgeführt werden kann, werden weitere Simulationen durchgeführt, für die Varianten der Prozessparameter und/oder des Formteilmodells erstellt werden. Dabei ist es möglich, lediglich eine Teilanzahl der Prozessparameter zu variieren.

Die Varianten der Prozessparameter und/oder des Formteilmodells werden vorzugsweise automatisiert erstellt. Hierfür kann eine statistische Versuchsplanung vorgesehen werden. Vom Nutzer wird hierfür zu mindestens einer Teilanzahl der Prozessparameter jeweils ein Prozessparameterbereich, der vorgibt, in welchen Grenzen die Prozessparameter verändert werden können, und ein Formteilmodellbereich, der vorgibt in welchen Grenzen das Formteilmodell variiert werden kann, definiert. Des Weiteren definiert der Nutzer Auswertungsmerkmale, das sind Merkmale, anhand derer festgelegt wird, ob ein Spritzgießprozess als optimiert betrachtet werden kann. In einem späteren, weiter unten dargestellten Schritt werden den Auswertungsmerkmalen zu jeder Simulationsrechnung Auswertungsmerkmalswerte zugeordnet, mit denen über einen Algorithmus die Bestimmung der Bedingungen für einen optimierten Spritzgießprozess ermittelt werden können. Der Nutzer definiert zudem Auswertungsmerkmalswertbereiche, welche die Grenzen vorgeben, innerhalb derer die Auswertungsmerkmalswerte liegen dürfen.

Nach der ersten Simulationsrechnung werden unter Einbeziehung des Formteilmodellbereichs, der Prozessparameterbereiche und der Auswertungsmerkmalswertbereiche die Varianten der Prozessparameter und optional des Formteilmodells, vorzugsweise automatisiert, erzeugt, weiter vorzugsweise mit statistischer Versuchsplanung. Es werden mehrere Sätze von variierten Prozessparametern und - falls vorgesehen - mehrere Formteilmodellvarianten für eine bestimmte Anzahl von Simulationsrechnungen erzeugt. Alternativ kann auch vorgesehen werden, den Schritt der Variantenerzeugung mehrfach, jeweils zwischen zwei Simulationsrechnungen durchzuführen, das heißt, nach z.B. der ersten Simulationsrechnung erneut mindestens einen variierten Prozessparameter und, falls vorgesehen, eine Formteilmodellvariante für eine oder mehrere weitere Simulationsrechnungen zu erzeugen.

Mit jeweils einem Satz der variierten Prozessparameter und - sofern vorgesehen - jeweils einer der Formteilmodellvarianten können n - 1 weitere Simulationsrechnungen durchgeführt werden. Hiernach werden die Ergebnisse der n Simulationsrechnungen an eine Auswerteeinheit übergeben. Zusätzlich zu den Ergebnissen der Simulationsrechnungen sind der Auswerteeinheit die Auswertungsmerkmale und die Auswertungsmerkmalswertbereiche bekannt, die in einer in Fig. 1 nicht dargestellten Weise übermittelt werden.

Die Auswertungsmerkmale basieren zumindest zum Teil auf Umgebungsparameter, die ebenfalls vom Nutzer definiert werden oder in der genutzten Software hinterlegt sind. Umgebungsparameter sind zusätzliche, die über die üblichen, aus dem Stand der Technik bekannten Prozessparameter hinausgehen und für den realen Spritzgießprozess zu berücksichtigende Umgebungsbedingungen einbeziehen.

Zudem kann für zumindest einen der Umgebungsparameter jeweils ein vom Nutzer vorgegebener oder in der Software hinterlegter Umgebungsparameterbereich gesetzt sein, mit dem Grenzen für den betroffenen Umgebungsparameter definiert sind. Bei Verlassen des Umgebungsparameterbereichs kann z.B. ein Warnsignal abgegeben werden. Ein solcher Umgebungsparameterbereich kann zum Beispiel für Umgebungstemperaturen oder Luftfeuchtigkeit am Ort des Spritzgießprozesses sinnvoll definiert werden.

Zu mindestens einem der Auswertungsmerkmale kann der Nutzer Auswertungsteilmerkmale definieren, die alternativ auch in der Software vorgegeben sein können. Die Auswertungsteilmerkmale stehen wie die Auswertungsmerkmale für den Einfluss des Spritzgießprozess auf für die Optimierung des Spritzgießverfahrens interessierende Größen und werden bei der Auswertung der Simulationsrechnung(en) berücksichtigt. Außerdem können auch für die Auswertungsteilmerkmalswerte Bereiche definiert werden, welche Grenzen für akzeptable Werte vorgeben. Die Auswerteeinheit und die darin ablaufenden Vorgänge werden weiter unten dargestellt.

Außerdem kann der Nutzer optional festlegen, ob mindestens ein Auswerte(teil)merkmal und ggf. welches, mittels einer vorzugsweise externen Unterstützungseinheit in alternative ökobilanzielle Merkmale oder Größen umgerechnet werden soll. Diese Variante wird weiter unten erläutert.

Nach den Vorgaben des Nutzers, die über eine Schnittstelle von einem Nutzer für das computerimplementierte Verfahren eingegeben werden können oder in der zugehörigen Software bereits vorgegeben sind, wird in einer Simulationseinheit eine erste Simulationsrechnung zum Spritzgießprozess unter Nutzung der initialen Prozessparameter und dem initialen Formteilmodell durchgeführt.

Im nächsten Schritt werden Varianten der Prozessparameter und/oder des initialen Formteilmodells automatisiert erstellt, wobei eine statistische Versuchsplanung eingesetzt werden kann, z.B. ein D optimaler Versuchsplan. Die Anzahl n der Varianten kann je nach eingesetzter Methode für den statistischen Versuchsplan durch die genutzte Software vorgegeben sein, durch den Nutzer definiert oder unter Einsatz einer künstlichen Intelligenz ermittelt werden.

Entsprechend der Variantenanzahl werden weitere Simulationsrechnungen des Spritzgießprozesses unter Einsatz variierter Prozessparameter und/oder des variierten Formteilmodells durchgeführt. Im Ablaufdiagramm sind beispielhaft die Simulationen 1 bis n gezeigt. Für die jeweiligen weiteren Simulationsrechnungen können einzelne, eine Teilanzahl oder alle Prozessparameter variiert werden.

Die Ergebnisse der Simulationsrechnungen werden in einem weiteren Schritt an eine Auswerteeinheit übergeben. Die Auswerteeinheit kann eine physisch getrennte und über mindestens eine Schnittstelle mit der Simulationseinheit verbundene Einheit oder als Software Bestandteil einer Computereinheit sein, die auch die Simulationsrechnungen durchführt. Wie bereits dargestellt, können Einheiten und Schnittstellen virtuell realisiert werden, und z.B. innerhalb eine Netzwerkes (LAN oder WAN) verteilt sein können z.B. auch in einer dezentralen Organisation, z.B. in der Cloud.

Die Auswerteeinheit berechnet automatisiert anhand eines vorgegebenen Algorithmus unter Berücksichtigung der Umgebungsparameter die Auswirkungen des simulierten Spritzgießprozesses auf die Auswertungs(teil)merkmale und ordnet jedem der Auswertungs(teil)merkmale einen Auswertungs(teil)merkmalswert zu. Einer der Auswertungs(teil) merkmalswerte könnte z.B. in eindeutiger Weise für die bei einem spezifischen Spritzgießprozess entstehenden Materialkosten des eingesetzten Rohstoffes stehen. Ein anderer der Auswertungs(teil)merkmalswerte könnte beispielsweise für den Betrag der beim Einspritzvorgang insgesamt eingesetzten Energie stehen, die sich aus dem Basisenergieverbrauch der Spritzgießmaschine und der bei der Simulation berechneten Energie für den Spritzgießvorgang zusammensetzt.

In einem weiteren Schritt kann vorgesehen sein, weitergehende Informationen, hier auch als Unterstützungsinformationen bezeichnet, in das Verfahren einzubringen und Umgebungsparameter zu ändern oder anzupassen, wodurch sich die eine Teilanzahl der Auswertungs(teil)merkmale oder der zugehörige Auswertungs(teil)merkmalswert ändern kann. Es kann vorteilhaft sein, diese Maßnahme als Option vorzusehen. In Fig. 1 ist die Entscheidungsoption über die Notwendigkeit der Umrechnung in alternative ökobilanzielle Werte vorgesehen. Andere Werte sind ebenfalls möglich. Im Ablaufdiagramm führt in Fig.1 der Weg A2 von der Entscheidungsoption zur Fortführung des Ablaufdiagramms in Fig. 2.

Das Einbringen der Unterstützungsinformationen kann automatisiert beispielsweise über eine gesonderte Unterstützungseinheit in Form einer Software erfolgen, wobei der Informationsaustausch über eine Schnittstelle mit der Auswerteeinheit und/oder der Simulationseinheit erfolgt. So kann die Unterstützungseinheit z.B. Informationen über geänderte Rohstoff- oder Energiepreise oder eine geänderte Zusammensetzung des Energiemixes verfügen. Somit können Umgebungsparameter durch die Unterstützungseinheit verändert werden. Der Einsatz der Unterstützungseinheit bietet sich insbesondere an, wenn die Unterstützungseinheit auf zuverlässigere oder aktuellere Quellen zugreifen kann oder eine bessere Verrechnungsmöglichkeit bietet. In Fig. 2 ist die Übergabe zumindest einer Teilanzahl der von der Auswerteeinheit berechneten Auswertemerkmalswerte, abgekürzt AWMWe, an die Unterstützungseinheit dargestellt, sofern die Option der Umrechnung genutzt werden soll. Damit inbegriffen sind auch die Auswertungsteilmerkmalswerte. Diese sind der Übersichtlichkeit halber im Ablaufdiagramm nicht dargestellt, werden aber ebenfalls genutzt. Die Unterstützungseinheit kann durch eine optional externe Software gebildet sein. Die Unterstützungseinheit berechnet unter Nutzung der Unterstützungsinformationen alternative Auswertungs(teil)merkmalswerte.

Wenn alle Auswertungs(teil)merkmalswerte oder die von der Unterstützungseinheit berechneten alternativen Auswertungs(teil)merkmalswerte bekannt sind, werden in einem weiteren Schritt in der Auswerteeinheit diese für jede durchgeführte Simulationsrechnung jeweils einer Multifaktorfunktion zugeführt, in der mit einem bestimmten Algorithmus für jede Simulationsrechnung ein Multifaktorfunktionswert ermittelt wird. Der Algorithmus kann mit Anwendung einer künstlichen Intelligenz unter Einsatz maschinellen Lernens an dynamische Veränderungen angepasst werden, wie z.B. oben im allgemeinen Teil der Beschreibung dargestellt.

Die Multifaktorfunktionswerte können nun als mathematische Funktion in Abhängigkeit von den variierten Prozessparametern, den Umgebungsparametern und/oder den variierten Simulationsformteilmodellen dargestellt werden. Wie zum Beispiel oben in der allgemeinen Beschreibung dargestellt, kann nun anhand der Abhängigkeit, welche z.B. numerisch ermittelbar ist, ein Zielprozessparametersatz, ein Zielumgebungsparametersatz und/oder ein Zielsimulationsformteilmodell automatisiert berechnet werden, mit dem ein optimierter Spritzgießprozess erreicht werden kann.

Der Zielprozessparametersatz und/oder das Zielsimulationsformteilmodell können automatisiert in einem realen Spritzgießprozess bei Bedingungen, die dem Zielumgebungsparametersatz entsprechen oder nahekommen **(korrekt?**), eingesetzt werden. Es ist aber auch möglich, den Zielprozessparametersatz, den Zielumgebungsparametersatz und/oder das Zielsimulationsformteilmodell und/oder den erreichten Multifaktorfunktionswert als vorläufiges Endergebnis, in Fig. 2 als vorläufiges Optimum bezeichnet, an einer graphischen Nutzerschnittstelle darzustellen (siehe Fig. 2). Ein Nutzer kann dann entscheiden, ob das vorläufige Endergebnis endgültig wird oder ob eine Anpassung von Ausgangsgrößen, z.B. des initialen Prozessparametersatzes, des initialen Umgebungsparametersatzes und/oder des initialen Simulationsformteilmodells erfolgt und der Prozess von vorne gestartet wird, was von Fig.2 zu Fig. 1 übergreifend mit Weg A4 bezeichnet ist. Alternativ kann der Nutzer auch entscheiden, mit unveränderten Ergebnissen der bereits durchgeführten Simulationsrechnungen erneut den Prozess in der Auswerteeinheit zu starten, um mit einer geänderten Gewichtung der Umgebungsparameter die Auswertungs(teil)merkmalswerte neu zu berechnen, was von Fig.2 zu Fig. 1 übergreifend mit Weg A3 bezeichnet ist.

Nicht in den Figuren dargestellt ist die Möglichkeit des Nutzers, alternativ oder zusätzlich zur Änderung der Gewichtung der Umgebungsparameter eine Gewichtung der Auswertungs(teil)merkmalswerte in der Multifaktorfunktion zu ändern.

## Patentansprüche

1. Computerimplementiertes Verfahren zur Optimierung von Spritzgießprozessen, umfassend die Schritte

   a) Durchführen einer ersten Simulationsrechnung zum Spritzgießen eines Bauteils unter Einsatz eines initialen Simulationsformteilmodells und eines initialen Prozessparametersatzes,
   b) Durchführen mindestens einer weiteren Simulationsrechnung unter Einsatz mindestens einer veränderten Variante des Simulationsformteilmodells und/oder mindestens einer veränderten Variante der Prozessparameter,
   c) Übermitteln der Ergebnisse der Simulationsrechnungen an eine Auswerteeinheit, wobei in der Auswerteeinheit ein Umgebungsparametersatz vorliegt oder in die Auswerteeinheit ein Umgebungsparametersatz eingegeben wird, wobei die Auswerteeinheit eingerichtet ist, anhand der Ergebnisse jeder der übermittelten Simulationsrechnungen jeweilige Werte von Auswertungsmerkmalen eines Satzes von Auswertungsmerkmalen zu ermitteln, wobei zumindest zu einer Teilanzahl der Auswertungsmerkmale zur Berechnung des zugehörigen Auswertungsmerkmalwerts mindestens einer der Umgebungsparameter einbezogen wird,
   d) zu jeder Simulationsrechnung Berechnung eines Wertes einer Multifaktorfunktion anhand eines vorgegebenen Multifaktorfunktionsalgorithmus unter Einbeziehung der Auswertungsmerkmalswerte,
   e) automatisierte Verarbeitung der Werte der Multifaktorfunktion der verschiedenen Simulationen mittels der Auswerteeinheit, und
   f) aus der Verarbeitung der Werte der Multifaktorfunktion automatisierte Ermittlung eines Zielprozessparametersatzes, eines Zielformteilmodells und/oder eines Zielumweltparametersatzes für einen optimierten Spritzgießprozess.

2. Verfahren nach Anspruch 1, **dadurch gekennzeichnet, dass** der Multifaktorwertalgorithmus durch eine künstliche Intelligenz angepasst wird.

3.  Verfahren nach Anspruch 1 oder 2, **dadurch gekennzeichnet, dass** über mindestens eine Unterstützungseinheit-Schnittstelle zwischen der Auswerteeinheit und/oder der Simulationseinheit einerseits und einer externen Unterstützungseinheit Auswertungsmerkmale betreffende Unterstützungsinformationen ausgetauscht werden.

4.  Verfahren nach einem der vorhergehenden Ansprüche, **dadurch gekennzeichnet, dass** die externe Unterstützungseinheit eingerichtet ist, als Unterstützungsinformation eine Lebenszyklusanalyse (Life Cycle Assessment; LCA) für zumindest einen der Auswertungsmerkmale durchführen.

5.  Verfahren nach einem der vorhergehenden Ansprüche, **dadurch gekennzeichnet, dass** an einer graphischen Benutzerschnittstelle (GUI) Ergebnisse des Multifaktorwertes und/oder der ermittelten Auswertungsmerkmalswerte, vorzugsweise in Echtzeit, angezeigt werden und für einen Benutzer eine Eingabemöglichkeit bereitgestellt wird.

6.  Verfahren nach einem der vorhergehenden Ansprüche, **dadurch gekennzeichnet, dass** zur Berechnung des Multifaktorfunktionswertes zumindest einer der Auswertungsmerkmalswerte mit einem automatisiert oder manuell anpassbaren Gewichtungsfaktor gekoppelt wird und/oder zur Berechnung mindestens eines der Auswertungsmerkmalswerte zumindest einer der Umgebungsparameter mit einem automatisiert oder manuell anpassbaren Gewichtungsfaktor gekoppelt ist.

7.  Verfahren nach Anspruch 5 und 6, **dadurch gekennzeichnet, dass** ein Wert des Gewichtungsfaktor oder mindestens eines der Gewichtungsfaktoren über die graphische Benutzerschnittstelle eingegeben wird.

8.  Verfahren nach einem der vorhergehenden Ansprüche, **dadurch gekennzeichnet, dass** zu mindestens einem der Auswertungsmerkmale mindestens ein Auswertungsteilmerkmal definiert ist, zu diesem mindestens einen Auswertungsteilmerkmal in der Auswerteeinheit ein Auswertungsteilmerkmalswert ermittelt wird und jeder Auswertungsteilmerkmalswert in die Berechnung des jeweiligen Multifaktorfunktionswerts berücksichtigt wird.

9.  Verfahren nach einem der vorhergehenden Ansprüche, **dadurch gekennzeichnet, dass** der Zielprozessparametersatz, vorzugsweise automatisiert, einem realen Spritzgießprozess zugeführt wird.

10. System, umfassend eine Simulationseinheit und eine Auswerteeinheit, **dadurch gekennzeichnet, dass** das System zur Durchführung des Verfahrens nach einem der Ansprüche 1 bis 8 eingerichtet ist.

11. System nach Anspruch 10, des Weiteren umfassend eine, vorzugsweise graphische, Nutzerschnittstelle.

12. System nach Anspruch 10 oder 11, des Weiteren umfassend eine einen Datenspeicher für Umgebungsparameter oder eine Schnittstelle zur Eingabe von Umgebungsparameter aufweisende Unterstützungseinheit.

13. System nach einem der Ansprüche 10 bis 12, **dadurch gekennzeichnet, dass** mindestens eine der folgenden Einheiten, Simulationseinheit und/oder Auswerteeinheit und/oder bei Einbezug von Anspruch 11 die Unterstützungseinheit, als virtuelle Maschinen gebildet sind.

14. System nach einem der Ansprüche 10 bis 13, **dadurch gekennzeichnet, dass** mindestens zwei der folgenden Einheiten, Simulationseinheit und/oder Auswerteeinheit und/oder bei Einbezug von Anspruch 12 die Unterstützungseinheit, über ein weitreichendes Rechnernetz (WAN) miteinander verbunden sind.

15. System nach einem der Ansprüche 10 bis 14, weiter umfassend eine Spritzgießmaschine mit einer Schnittstelle zum Datenaustausch mit der Simulationseinheit und/oder der Auswerteeinheit und/oder bei Rückbezug auf Anspruch 11 der Nutzerschnittstelle.

Start

Nutzer definiert

Umgebungsparameter

Notwendigkeit der Umrechnung in alternative ökobilanzielle Werte

Initiales Formteilmodell

Initiale Prozessparameter

Formteilmodellbereich

Prozessparameterbereiche

Auswertungsmerkmale

Umgebungsparameterbereiche

Auswertungsmerkmalswertbereiche

Automatisierte Erstellung von Varianten

1. Simulation

2. Simulation

3. Simulation

n. Simulation

[...]

Übergabe der Ergebnisse an Auswerteeinheit

Auswerteeinheit berechnet Auswertungsmerkmalswerte (AWMW)

A1

A2

A3

A4

Fig. 1

A1  A2  A3  A4

Umrechnung AWMWe in alt. ökobil. Werte?

ja → Übergabe AWMWe an Unterstützungseinheit

nein

Software rechnet alternative AWMW aus

Auswerteeinheit berechnet Multifaktorfunktionswerte (MFFW) zu jeder Simulation und ermittelt Minimums einer MFFW-Funktion

Algorithmus definiert vorläufiges Optimum eines Fertigungsprozesses

Gewichtung Umgebungs-parameter

Vorl. Optimum wird dem Nutzer über GUI in Echtzeit dargestellt

Nutzer passt an

Ist vorläufiges Optimum zufriedenstellend

nein

ja

Ende

*Fig. 2*

EP 4 726 595 A1

Europäisches Patentamt
European Patent Office
Office européen des brevets

# EUROPÄISCHER RECHERCHENBERICHT

**Nummer der Anmeldung**

EP 24 20 6537

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 915 701 A1 (HERAEUS AMLOY TECH GMBH [DE]) 1. Dezember 2021 (2021-12-01)<br>* Zusammenfassung *<br>* Ansprüche 1, 4 *<br>* Absatz [0001] - Absatz [0002] *<br>* Absatz [0018] *<br>* Absatz [0031] - Absatz [0033] *<br>* Absatz [0035] - Absatz [0036] *<br>* Absatz [0038] - Absatz [0039] *<br>* Absatz [0043] *<br>* Absatz [0046] - Absatz [0047] *<br>* Absatz [0067] *<br>* Absatz [0070] *<br>* Absatz [0072] - Absatz [0075] *<br>* Absatz [0077] *<br>* Absatz [0080] *<br>* Abbildungen 1-3 *<br>----- | 1-15 | INV.<br>G06F30/20<br>B29C45/76<br>G05B17/02<br>G06F30/27<br><br>ADD.<br>G06F111/06<br>G06F113/22<br>G06F119/02<br>G06F119/08<br>G06F119/18 |
| X | DE 10 2020 212798 A1 (DMG MORI DIGITAL GMBH [DE]) 14. April 2022 (2022-04-14)<br>* Zusammenfassung *<br>* Absatz [0015] - Absatz [0016] *<br>* Abbildung 1 *<br>----- | 1-15 | |
| A | CN 118 246 277 A (GREE ELECTRIC APPLIANCES INC ZHUHAI) 25. Juni 2024 (2024-06-25)<br>* Zusammenfassung *<br>* Abbildung 9 *<br>-----<br>-/-- | 1-15 | **RECHERCHIERTE SACHGEBIETE (IPC)**<br><br>G06F<br>G05B<br>G06N<br>B29C<br>B22F |

Der vorliegende Recherchenbericht wurde für alle Patentansprüche erstellt

| Recherchenort | Abschlußdatum der Recherche | Prüfer |
|---|---|---|
| München | 13. März 2025 | Sohrt, Wolfgang |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

Seite 1 von 2

Europäisches Patentamt

European Patent Office

Office européen des brevets

# EUROPÄISCHER RECHERCHENBERICHT

**Nummer der Anmeldung**

EP 24 20 6537

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2023/347564 A1 (WOLLNY ANDREAS [DE] ET AL) 2. November 2023 (2023-11-02) <br> * Zusammenfassung * <br> * Absatz [0025] * <br> * Absatz [0048] - Absatz [0049] * <br> * Absatz [0053] * <br> * Absatz [0064] * <br> * Absatz [0076] * <br> * Absatz [0110] - Absatz [0111] * <br> * Abbildung 1 * <br> ----- | 1-15 | |
| A | CN 117 556 677 A (UNIV CENTRAL SOUTH) 13. Februar 2024 (2024-02-13) <br> * Zusammenfassung * <br> * Absatz [n0002] * <br> * Absatz [n0028] * <br> * Absatz [n0032] * <br> * Absatz [n0034] * <br> * Absatz [n0047] * <br> * Absatz [n0078] * <br> * Absatz [n0073] * <br> ----- | 1-15 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 13. März 2025 | Sohrt, Wolfgang |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie, übereinstimmendes Dokument

EPO FORM 1503 03.82 (P04C03)

**EP 4 726 595 A1**

**ANHANG ZUM EUROPÄISCHEN RECHERCHENBERICHT
ÜBER DIE EUROPÄISCHE PATENTANMELDUNG NR.**    EP 24 20 6537

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-03-2025

| Im Recherchenbericht angeführtes Patentdokument | Datum der Veröffentlichung | Mitglied(er) der Patentfamilie | Datum der Veröffentlichung |
|---|---|---|---|
| EP 3915701 A1 | 01-12-2021 | CN 115551660 A | 30-12-2022 |
| | | EP 3915701 A1 | 01-12-2021 |
| | | JP 7521009 B2 | 23-07-2024 |
| | | JP 2023530067 A | 13-07-2023 |
| | | KR 20220164632 A | 13-12-2022 |
| | | US 2023234132 A1 | 27-07-2023 |
| | | WO 2021239703 A1 | 02-12-2021 |
| DE 102020212798 A1 | 14-04-2022 | CN 114326596 A | 12-04-2022 |
| | | DE 102020212798 A1 | 14-04-2022 |
| | | EP 3982211 A1 | 13-04-2022 |
| | | JP 2022063240 A | 21-04-2022 |
| | | US 2022121183 A1 | 21-04-2022 |
| CN 118246277 A | 25-06-2024 | KEINE | |
| US 2023347564 A1 | 02-11-2023 | BR 112023002471 A2 | 28-03-2023 |
| | | CN 116056862 A | 02-05-2023 |
| | | EP 4196333 A1 | 21-06-2023 |
| | | JP 2023538885 A | 12-09-2023 |
| | | KR 20230051258 A | 17-04-2023 |
| | | US 2023347564 A1 | 02-11-2023 |
| | | WO 2022034210 A1 | 17-02-2022 |
| CN 117556677 A | 13-02-2024 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8392160 B2

**In der Beschreibung aufgeführte Nicht-Patentliteratur**

- D-Optimaler Versuchsplan. *CRGRAPH unter https:// crgraph.de/themen-index*, 2020